Europäisches Patentamt

European Patent Office

Office européen des brevets

(11) Veröffentlichungsnummer: **0 101 848**
**A1**

(12) # EUROPÄISCHE PATENTANMELDUNG

(21) Anmeldenummer: 83106717.8

(22) Anmeldetag: 08.07.83

(51) Int. Cl.³: **F 16 B 12/10**
**A 47 B 13/08**

(30) Priorität: 28.08.82 DE 3232091

(43) Veröffentlichungstag der Anmeldung:
07.03.84 Patentblatt 84/10

(84) Benannte Vertragsstaaten:
AT BE CH FR GB IT LI NL SE

(71) Anmelder: Rosenthal Aktiengesellschaft
Wittelsbacherstrasse 42 Postfach 1520
D-8672 Selb/Bayern(DE)

(72) Erfinder: Thurm, Karlheinz
Spitalgasse 11
Herrenberg(DE)

(54) **Traverse mit Spannteil zum Zusammenbau von Möbel.**

(57) Mittels einer Traverse (1) und Schraubzwingen (2) werden einzelne Möbelteile zusammengehalten. Die verschiebbaren Spannteile (3) der Schraubzwinge (2) greifen in die Seitenteile (4) des Möbels ein und beim Anziehen der Befestigungsmittel (7) tritt gleichzeitig eine Verklemmung mit den Seitenteilen als auch mit der Traverse (1) auf. Ein solches Konstruktionselement eignet sich zum Zusammenbau von Möbel, insbesondere, Tischen und Sitzgelegenheiten mit rechteckigem Grundriß. Für die Seitenteile kann nicht nur Holz und Metall, sondern auch Glas und Keramik genommen werden.

EP 0 101 848 A1

FIG. 1

RAP 3044

Rosenthal Aktiengesellschaft

Selb, den 17.08.1982
Re/li/RA.P. 3044

## Traverse mit Spannteil zum Zusammenbau von Möbel

Die Erfindung betrifft eine Traverse zum Zusammenbau von Möbel, insbesondere von Tischen und Sitzgelegenheiten mit rechteckigem Grundriß, als Haltevorrichtung zwischen zwei plattenförmigen Körpern die aus Holz oder anderen geeigneten Materialien hergestellt sind.

Bei zusammenbaubaren Möbel gibt es eine große Anzahl von technischen Möglichkeiten, wobei je nach Zweckbestimmung des Produktes spezifische Bauteile geschaffen werden. So werden zum Beispiel aus einzelnen Teilen zusammensetzbare Tische und Sitzmöbel in der DE-PS 23 31 366 beschrieben, bei denen die Einzelteile durch eine kombinierte Schraub-/Steckverbindung und aus bestehenden Stützen zusammengesetzt werden, zu denen man ein Oberteil hinzufügt, das aus Holz, Metall oder anderen Materialien besteht. Das Oberteil kann einfach auf das Gestell aufgesetzt werden oder wenn man eine dauerhafte Befestigung bewirken will, indem es mit den Stützen verschraubt wird. Solcher Art zusammengesetzter Möbel weisen aber aus wirtschaftlicher Sicht einige Nachteile auf, da die Verbindungselemente in den meisten Fällen mit Schraubenbolzen verbunden sind, was einer leichten und schnellen Veränderung entgegensteht. Außerdem bestehen die bekannten Konstruktionen aus einer wechselnden unbegrenzten Anzahl verschiedener nichtgenormter Elemente,

- 2 -

die jeweils speziell gestaltet werden. Es ist deshalb verständlich, daß man nach Möbel sucht, die aus wenigen Normteilen bestehen und immer wieder brauchbar sind als auch eine größtmögliche Vielfalt von Einrichtungskombinationen erlaubt, wobei der Wechsel von einer zur anderen Kombination schnell und leicht möglich sein soll. Dieser Wunsch nach einfachem Zusammenbau und ästhetischem Aussehen, wobei gleichzeitig eine große Abwandlungsbreite vorhanden sein soll, läßt sich aber hier nicht erfüllen.

Aus der internationalen Anmeldung WO 81/00666 ist ferner bekannt geworden, Möbel dadurch herzustellen, daß man Seitenwände durch Traversen verbindet. Die hier beschriebene Traverse eignet sich aber nur zum Zusammenbau von Schränken und Regalen, aber nicht für Tische und Sitzgelegenheiten, da hierfür nur eine geringe Stabilität von der Konstruktionsseite vorliegt.

Es ist deshalb verständlich, daß man nach einfachen und wirtschaftlichen Verbindungselementen der eingangs genannten Gattung sucht.

Der Erfindung liegt deshalb die Aufgabe zugrunde, eine Traverse so auszubilden, daß daraus Möbel, insbesondere Tische mit wenigstens zwei Fußelementen, zusammengesetzt werden und mit einer Vorrichtung so miteinander verbunden sind, daß die Montage einfach als auch eine Anpassung an verschiedene Platzverhältnisse möglich ist. Ferner soll dabei erreicht werden, plattenförmige Teile aus verschiedenen Materialien wie Holz, Glas, Stein und Keramik ohne sie zu verkleben oder zu verschrauben im Bereich der Möbelherstellung miteinander zu verbinden.

Zur Lösung dieser Aufgabe geht die Erfindung von dem
eingangs erläuterten Stand der Technik aus und schlägt
vor, daß die Möbelteile durch mindestens eine Traverse
und Schraubzwinge zusammengehalten sind, wobei jeweils
zwei parallele Spannteile an das Seitenteil des Möbels
eingreifen.

Eine weitere Ausbildung der Erfindung besteht darin,
bei dem verschiebbaren Spannteil eine Klemmwirkung
zu erhalten, wenn man an der Öffnung vom Spannteil zur
Aufnahme der Traverse jeweils Winkel anbringt. Auch
durch einfache Befestigungsmittel am Spannteil der
Schraubzwinge wird das Seitenteil verklemmt, ohne daß
hier an diesem Bohrungen vorgenommen werden müssen.
Ferner empfiehlt es sich, auf der Traverse Auflage- und
Stützvorrichtungen zur Aufnahme von Verbindungsplatten
zwischen den beiden Seitenteilen anzubringen. Sollen
Seitenteile aus Keramik oder Glas verwendet werden,
so ist es zweckmäßig, diese Seitenteile für die Aufnahme der Schraubzwinge mit Ausnehmungen zu versehen.

Mit der erfindungsgemäßen Traverse lassen sich auf
einfache Weise Möbel und Sitzgelegenheiten ohne
Benutzung von Leim, Schrauben und Nägel mit wenigen
Handgriffen aus Standardelementen zusammensetzen,
wobei die Seitenteile des Möbelstücks starr miteinander
verbunden und verstrebt sind. Die erfindungsgemäße Traverse

- 4 -

hat auch den Vorteil, daß sie kostensparend wirkt, da die beiden Schraubzwingen auf der Traverse verschiebbar sind, wodurch eine gute Möglichkeit besteht, sich an andere Platzverhältnisse zu orientieren. Außerdem läßt sich das Möbelstück leicht wieder in Einzelteile zerlegen und ist gut stapelbar, so daß Lagerhaltung und Transport vereinfacht werden. Ferner erlaubt die Traverse die Herstellung von Möbel, die in ihrer Konstruktion neu sind und eine große Variabilität erlauben. Mit der eingangs erwähnten Traverse ist ein Ergebnis gefunden worden, die Einfachheit preiswerter Möbel mit einer gewissen Exclusivität zu versehen.

Weitere vorteilhafte Ausgestaltungen ergeben sich aus der Beschreibung. Die Erfindung wird nunmehr anhand eines Ausführungsbeispiels in Verbindung mit den Zeichnungen näher beschrieben. Es zeigen:

Fig. 1: Längsschnitt durch einen Teil der Traverse mit einer Schraubzwinge;

Fig. 2: Seiten- und Vorderansicht des Spannteils;

Fig. 3: Seitenansicht eines Tisches mit der erfindungsgemäßen Traverse.

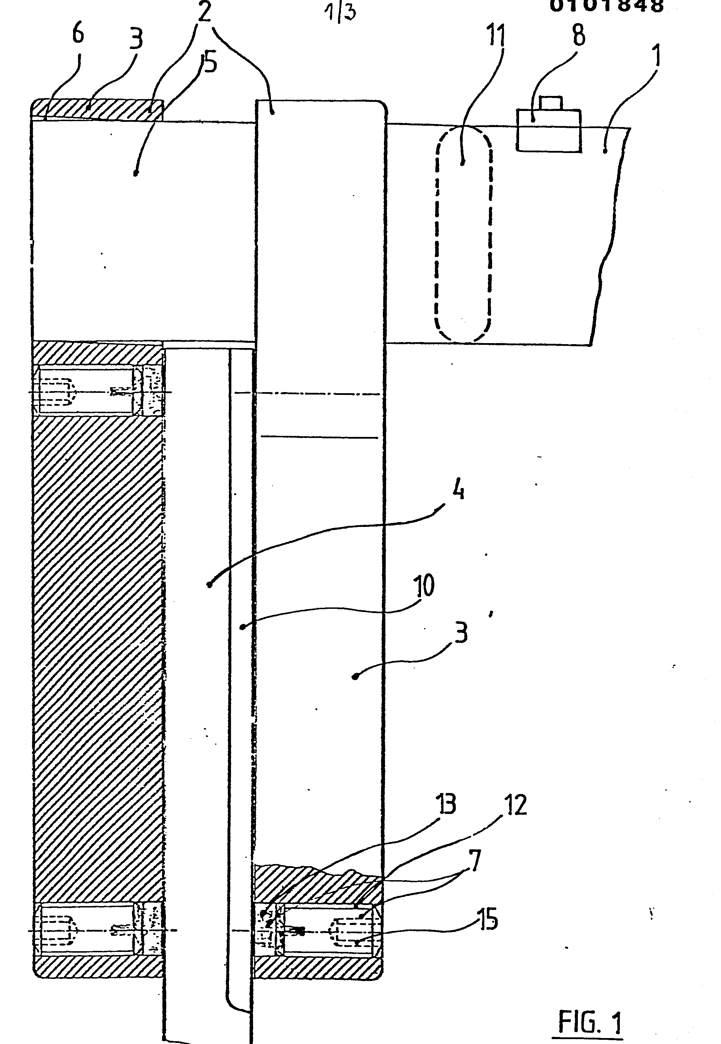

In der Fig. 1 wird ein Teilquerschnitt der Traverse 1 dargestellt, insbesondere die Ausbildung der Schraubzwinge 2 mit ihren Spannteilen 3. Die Traverse 1 selbst kann beispielsweise aus einer Aluminiumlegierung oder aus einem relativ festen Kunststoff bestehen. Der Querschnitt 11 der Traverse ist vorzugsweise oval, damit sich die Schraubzwinge 2 nicht drehen kann. Es besteht aber auch die Möglichkeit, daß die Traverse 1 rund ist, wobei man dann aber Klemmvorrichtungen vorsehen muß. Die Schraubzwinge 2 selbst besitzt zwei parallele Spannteile 3, in denen Bohrungen 12 zur Aufnahme von Befestigungsmitteln vorgesehen sind. So kann beispielsweise durch Anziehen von Schrauben 15 in den Bohrungen 12 ein Druck auf die Plastikteile 13 ausgeübt werden, der dann auf das Seitenteil 4 wirkt. Durch das Vorhandensein von jeweils zwei Schrauben 15 auf den beiden Seitenteilen 4 des Spannteils 3 läßt sich eine gute Parallelität erreichen, wodurch sich eine vollständige starre Verbindung ergibt. Aus ästhetischen Gründen können noch die Schraubköpfe, insbesondere Madenschrauben mit Plastikhütchen abgedeckt werden. Vor allem dann, wenn die Schrauben 15 einen Senkkopf besitzen, der in das Spannteil 3 eingelassen ist. Die beiden Spannteile 3 bilden praktisch die Form einer Schraubzwinge 2, wobei die beiden parallelen Spannteile insofern einen nennenswerten Fortschritt ergeben, indem sie ein Verbindungsmittel darstellen, daß sowohl für rechte als auch linke Seitenteile 4 verwendet werden kann.

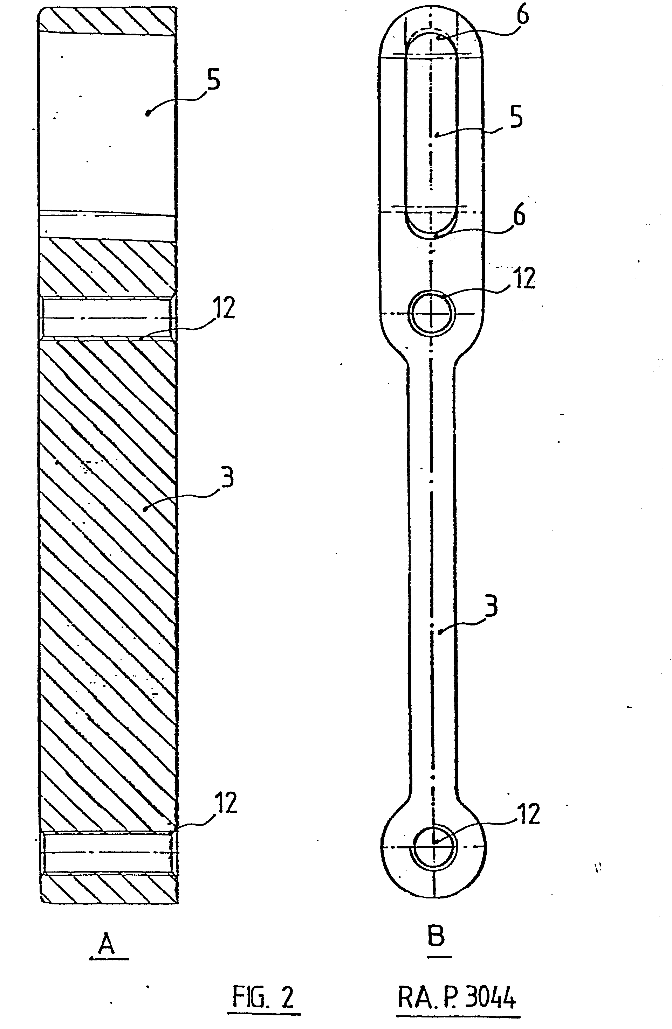

In der Fig. 2 ist das Spannteil 3 als Seitenansicht A und als Vorderansicht B dargestellt. Hier geht noch einmal hervor, daß die Schraubzwinge 2 insbesondere das Spannteil 3 mit jeweils zwei Bohrungen 12 für die Aufnahme von Arretierschrauben 15 versehen ist. Sowohl aus der Vorder- als auch Seitenansicht ist hier deutlich zu erkennen, daß die Öffnung 5 mit keilartiger Schräge 6 bei einer Steigung von ca. 2 % versehen ist, die auf die Traverse 1 beim Anziehen der Arretierschrauben 15 eine Verklemmung bewirken. Insbesondere zeigt aber die Vorderansicht B, daß das Spannteil 3 neben der funktionellen Aufgabe auch noch einen ästhetischen Charakter aufweisen kann.

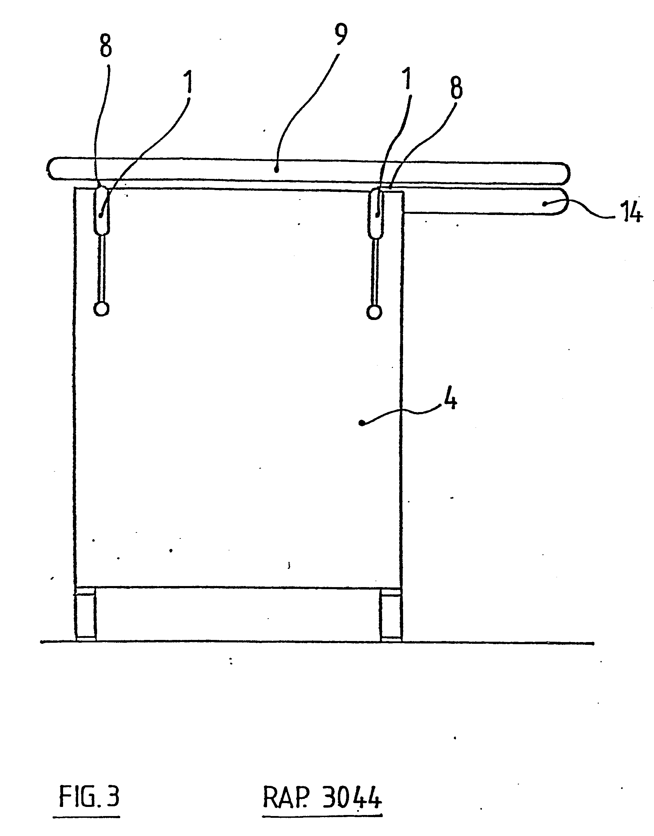

Die Fig. 3 zeigt ein Seitenteil 4 mit zwei Traversen 1 und einer Verbindungsplatte 9, wodurch sich ein Tisch ergibt. Im einfachsten Fall wird die Platte 9 auf einfache Auflage- oder Stützvorrichtungen 8 gelegt, aber man kann auch in der Platte bestimmte Fixierpunkte versehen, wobei dann Stützvorrichtungen in entsprechende Nuten der Platte 9 eingreifen. In der Verbindungsplatte 9 lassen sich dann weitere Elemente wie Ausziehplatten 14 oder Hängeschränke anbringen. Bei solchen Möbelstücken wird vorzugsweise die Anordnung so getroffen, daß die Seitenteile 4 aufgestellt werden und daß die beiden Traversen 1 paarweise eingelegt werden. Die Doppelschraubzwingen 2 werden dann mit der Traverse 1 verklemmt, indem die Spannteile 3 mit Hilfe der Schrauben 15 angezogen werden. Damit erhält man einen Grundkörper, auf dem dann die Verbindungsplatte 9 befestigt werden kann. Wie zum Beispiel eine Arbeitsplatte, wobei diese beliebig breit oder lang sein kann.

In gleicher Weise können dann mit anderen Abmessungen Hocker oder Sideboards gebildet werden. Somit lassen sich mit der erfindungsgemäßen Traverse mittels einfacher Profile, in denen keine besonderen Toleranzen beachtet werden müssen, miteinander verbindbare Untergestelle ausbilden. Die Vielseitigkeit der Anwendung der Traverse 1 liegt auch darin, daß man ohne Verkleben, Schrauben oder Verschweißen die unterschiedlichen Werkstoffe miteinander verbinden kann. Dabei ist es aber sinnvoll, wenn Keramik oder Glas verwendet wird, Ausnehmungen 10 an den Seitenteilen 4 vorzusehen, in denen die beiden Spannteile 3 eingreifen. Ferner besteht auch die Möglichkeit, mittels eines Adapters seitliche Anbauteile anzubringen.

Selb, den 17.08.1982

**0101848**

Patentansprüche

1. Traverse zum Zusammenbau von Möbel, insbesondere von Tischen und Sitzgelegenheiten mit rechteckigem Grundriß, als Haltevorrichtung zwischen zwei plattenförmigen Körpern, die aus Holz, Metall oder anderen geeigneten Materialien hergestellt sind, dadurch gekennzeichnet, daß die Möbelteile durch mindestes eine Traverse (1) und Schraubzwinge (2) zusammengehalten sind, wobei jeweils zwei parallele Spannteile (3) an das Seitenteil (4) des Möbels eingreifen.

2. Traverse nach Anspruch 1, dadurch gekennzeichnet, daß an der Öffnung (5) vom Spannteil (3) zur Aufnahme der Traverse (1) jeweils Winkel (6) angebracht sind, um bei den verschiebbaren Spannteilen (3) eine Klemmwirkung zu erhalten.

3. Traverse nach Anspruch 1, dadurch gekennzeichnet, daß die Spannteile (3) der Schraubzwinge (2) Befestigungsmittel (7) zum Verklemmen des Seitenteils (4) aufweisen.

4. Traverse nach Anspruch 1 bis 3, dadurch gekennzeichnet, daß auf der Traverse (1) Auflage- und Stützvorrichtungen (8) für die Verbindungsplatte (9) zwischen den beiden Seitenteilen (4) angebracht sind.

5. Traverse nach Anspruch 1 bis 3, dadurch gekennzeichnet, daß bei den Seitenteilen (4) Ausnehmungen (10) für die Aufnahme der Schraubzwinge (2) vorgesehen sind.

0101848

FIG. 1

RAP. 3044

2/3

0101848

A

FIG. 2

B

RA. P. 3044

0101848

FIG. 3     RAP. 3044

Europäisches
Patentamt

## EUROPÄISCHER RECHERCHENBERICHT

### EINSCHLÄGIGE DOKUMENTE

EP 83106717.8

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| D,A | <u>WO - A1 - 81/00 666</u> (C. VATTIER) <br> * Ansprüche 1,2; Fig. * <br> -- | 1 | F 16 B 12/10 <br> A 47 B 13/08 |
| A | <u>FR - A1 - 2 434 947</u> (P. LAMBERET) <br> ---- | | |

**RECHERCHIERTE SACHGEBIETE (Int. Cl. ³)**

F 16 B
A 47 B

Der vorliegende Recherchenbericht wurde für alle Patentansprüche erstellt.

| Recherchenort | Abschlußdatum der Recherche | Prüfer |
|---|---|---|
| WIEN | 14-11-1983 | HOFBAUER |